# FASCICULE DE BREVET EUROPEEN

(11) **EP 2 737 378 B1**
(45) Date de publication et mention de la délivrance du brevet: **30.12.2020**
(21) Numéro de dépôt: 12744107.9
(22) Date de dépôt: 25.07.2012
(51) Int. Cl.: G05D 1/02, G01V 3/165

(54) **PROCÉDÉ ET DISPOSITIF DE CONTRÔLE DU DÉPLACEMENT D'UN SYSTEME MOBILE DANS UN MILIEU CONDUCTEUR D'ÉLECTRICITÉ**
VERFAHREN UND VORRICHTUNG ZUR STEUERUNG DER BEWEGUNG EINES MOBILEN SYSTEMS IN EINER ELEKTRISCH LEITENDEN MEDIUM
METHOD AND DEVICE FOR MOTION CONTROL OF A MOBILE SYSTEM IN AN ELECTRICALLY CONDUCTIVE MEDIUM

(30) Priorité: 28.07.2011 FR 1156894
(43) Date de publication de la demande: 04.06.2014
(73) Titulaire: Association pour la Recherche et le Développement des Méthodes et Processus Industriels "ARMINES", 75006 Paris (FR)
(72) Inventeur: GIRIN, Alexis, F-44300 Nantes (FR); LEBASTARD, Vincent, F-44260 Savenay (FR); GOSSIAUX, Pol-Bernard, F-44390 Petit Mars (FR); BOUVIER, Stéphane, F-44000 Nantes (FR); BOYER, Frédéric, F-44850 Mouzeil (FR); SERVAGENT, Noël, F-44240 La Chapelle Sur Erdre (FR)
(74) Mandataire: Cabinet Beau de Loménie
(86) Numéro de dépôt international: PCT/FR2012/051764
(87) Numéro de publication internationale: WO 2013/014392

(56) Documents cités:
- LEBASTARD V ET AL: "Underwater robot navigation around a sphere using electrolocation sense and Kalman filter", INTELLIGENT ROBOTS AND SYSTEMS (IROS), 2010 IEEE/RSJ INTERNATIONAL CONFERENCE ON, IEEE, PISCATAWAY, NJ, USA, 18 octobre 2010 (2010-10-18), pages 4225-4230, XP031919999, DOI: 10.1109/IROS.2010.5648929 ISBN: 978-1-4244-6674-0
- SOLBERG J R ET AL: "Robotic Electrolocation: Active Underwater Target Localization with Electric Fields", 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10 avril 2007 (2007-04-10), pages 4879-4886, XP031389556, ISBN: 978-1-4244-0601-2
- JAMES R SOLBERG ET AL: "Active Electrolocation for Underwater Target Localization", INTERNATIONAL JOURNAL OF ROBOTICS RESEARCH, SAGE SCIENCE PRESS, THOUSAND OAKS, US, vol. 27, no. 5, 1 mai 2008 (2008-05-01), pages 529-548, XP009156282, ISSN: 0278-3649
- CHETTY ET AL: "Electrical Field Based Obstacle Avoidance", FSR'97 - PROCEEDINGS OF THE INTERNATIONAL CONFERENCE ON FIELD AND SERVICE ROBOTICS, CANBERRA, AUSTR, ALEXANDER ZELINSKY, AUSTRALIA, 1 January 1997 (1997-01-01), pages 378-382, XP009193238, ISBN: 978-0-9587583-1-4
- LEBASTARD V ET AL: "Underwater robot navigation around a sphere using electrolocation sense and Kalman filter", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 4225-4230, XP031919999, DOI: 10.1109/IROS.2010.5648929 ISBN: 978-1-4244-6674-0
- SOLBERG J R ET AL: "Robotic Electrolocation: Active Underwater Target Localization with Electric Fields", 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10 April 2007 (2007-04-10), pages 4879-4886, XP031389556, ISBN: 978-1-4244-0601-2
- JAMES R SOLBERG ET AL: "Active Electrolocation for Underwater Target Localization", INTERNATIONAL JOURNAL OF ROBOTICS RESEARCH, SAGE SCIENCE PRESS, THOUSAND OAKS, US, vol. 27, no. 5, 1 May 2008 (2008-05-01), pages 529-548, XP009156282, ISSN: 0278-3649, DOI: 10.1177/0278364908090538

## Description

### Arrière-plan de l'invention

La présente invention se situe dans le domaine du contrôle du déplacement d'un système mobile dans un milieu conducteur d'électricité, par exemple dans l'eau.

Le document de Lebastard V. et al., « Underwater robot navigation around a sphere using electrolocation sense and Kalman filter », publié dans le document Proceedings of international conférence on Intelligent Robots ans Systems (IROS) 2010, Piscataway NJ USA, le 18 octobre 2010, décrit un procédé permettant la navigation d'un robot sous-marin, équipé d'un capteur électrique, dans un environnement contenant une sphère.

Le document de Chetty et al., « Electrical Field Based Obstacle avoidance », publié dans le document Proceedings of international conference onField and Service Robotics (FSR) 97, Canberra Australie, publié le 1er janvier 1997, décrit un procédé permettant le déplacement d'un système mobile dans un réservoir d'eau de forme rectangulaire, en fonction de la nature, conductrice ou isolatrice, d'un objet détecté dans le réservoir.

Le document « Underwater Robotic: localization with electrolocation for collision avoidance », publié dans le document, Proceedings of CIFA2008, Bucarest Romania, en septembre 2008, décrit un robot apte à mesurer, en utilisant des électrodes, un courant électrique conduit par l'eau d'un aquarium, et à se déplacer dans cet aquarium, à partir de ces mesures de courant.

Plus précisément, selon ce document, les mesures de courant électriques sont utilisées pour calculer des paramètres géométriques de la scène dans laquelle évolue le robot, ces paramètres géométriques et d'autres contraintes géométriques étant utilisées pour calculer une loi de commande du déplacement du robot, le long d'une paroi de l'aquarium.

Ce procédé, bien que particulièrement intéressant, nécessite par conséquent une connaissance a priori de la scène dans lequel évolue ce robot.

Pour certaines applications, notamment d'exploration, la connaissance a priori de la scène ne peut être obtenue.

L'invention vise un procédé pour contrôler le déplacement d'un système mobile dans un milieu conducteur d'électricité qui ne présente pas cet inconvénient. En particulier, le procédé de l'invention permet de définir un comportement désiré du système mobile dans le milieu conducteur.

### Objet et résumé de l'invention

Plus précisément, et selon un premier aspect, l'invention concerne un procédé de contrôle du déplacement d'un système mobile dans un milieu conducteur d'électricité, ce système comportant au moins deux électrodes, dites réceptrices, en contact avec ce milieu. Ces électrodes sont situées de part et d'autre d'un axe de déplacement du système mobile. Ce procédé peut s'appliquer sans connaissance dudit milieu ni des obstacles qui s'y trouvent. Il comporte :
- une étape de mesure d'une caractéristique électrique de ce milieu par ces électrodes réceptrices, ladite caractéristique électrique comporte un courant axial et un courant latéral obtenus respectivement en faisant la somme et la différence des intensités des courants au niveau des électrodes réceptrices ; et
- une étape de génération d'une consigne de déplacement du système mobile en utilisant une loi de rétroaction calculée directement à partir de cette caractéristique électrique pour éloigner ou rapprocher le système mobile d'un objet conducteur ou d'un objet isolant, la loi de rétroaction étant modifiée en fonction de la caractéristique électrique mesurée.

Corrélativement, l'invention concerne un dispositif pouvant être fixé ou incorporé à un système mobile apte à se déplacer dans un milieu conducteur d'électricité, ce dispositif pouvant être utilisé sans connaissance du milieu ni des obstacles qui s'y trouvent, et comportant :
- au moins deux électrodes, dites réceptrices, en contact avec ce milieu, et situées de part et d'autre d'un axe de déplacement du système;
- des moyens de mesure d'une caractéristique électrique de ce milieu par ces électrodes réceptrices, la caractéristique électrique comportant un courant axial et un courant latéral obtenus respectivement en faisant la somme et la différence des intensités des courants au niveau des électrodes réceptrices ; et
- des moyens de génération d'une consigne de déplacement du système mobile en utilisant une loi de rétroaction calculée directement à partir de cette caractéristique électrique pour éloigner ou rapprocher le système mobile d'un objet conducteur ou d'un objet isolant, la loi de rétroaction étant modifiée en fonction de la caractéristique électrique mesurée.

L'invention vise aussi un système mobile comportant un tel dispositif.

Ainsi, et d'une façon générale, l'invention propose de mesurer des caractéristiques électriques (différentiel de potentiel ou intensité de courant) à la surface du système mobile en contact avec le milieu conducteur, pour générer des consignes de déplacement de ce système dans le milieu.

Le procédé et le dispositif selon l'invention sont remarquables, en ce que la loi de rétroaction est directement calculée en fonction des mesures électriques, c'est-à-dire, sans connaissance à priori du milieu, ni des obstacles qui se trouvent dans ce milieu. En effet, à moins qu'ils ne présentent une conductivité exactement identique à celle du milieu, les obstacles conducteurs ou isolants sont automatiquement détectés, dès lors qu'ils perturbent l'environnement électrique du dispositif.

L'invention trouve donc une utilisation privilégiée mais non limitative dans les environnements confinés ou troubles dans lesquels les radars, sonars ou caméras sont en pratique inopérants.

Dans une première variante de réalisation, le dispositif selon l'invention est passif, l'énergie électrique fournie au milieu conducteur étant générée par une source exogène présente dans le milieu. Cette variante est particulièrement adaptée pour attirer le système mobile vers cette source.

Dans une deuxième variante de réalisation, le dispositif comprend au moins deux électrodes l'une desdites électrodes étant une électrode réceptrice minimale telle que mentionnée ci-dessus, apte à mesurer la caractéristique électrique du milieu conducteur (ici l'intensité d'un courant), l'autre étant une électrode génératrice apte à imposer un courant électrique au milieu.

Bien entendu, le dispositif peut comporter plus d'une électrode génératrice, et plus d'une électrode réceptrice.

Dans un mode de réalisation, les électrodes génératrices et les électrodes réceptrices sont électriquement connectées entre elles au sein du système mobile, la caractéristique électrique mesurée par une électrode réceptrice étant l'intensité d'un courant électrique traversant la surface de cette électrode réceptrice, en contact avec ledit milieu.

Dans un autre mode, la caractéristique électrique mesurée est le potentiel électrique sur la surface d'une dite électrode réceptrice, en contact avec le milieu, par rapport à un potentiel de référence du système. Dans ce mode, l'électrode réceptrice n'est pas connectée à une électrode génératrice au sein du système.

Ainsi, lorsque le système mobile est immergé dans le milieu conducteur d'électricité, il se créé des lignes de champ fermées entre les électrodes génératrices et les électrodes réceptrices. Ces lignes de champs engendrent dans le milieu conducteur un réseau de lignes de courants qui se referment sur ces électrodes, formant ainsi la boucle des courants excitateurs.

Dans un mode particulier de réalisation de l'invention, le procédé de contrôle selon l'invention comporte une étape de gestion de la connectivité électrique entre les électrodes, au sein du système mobile, suivi d'une étape de sélection des fonctions desdites électrodes qui peuvent alors être génératrices, réceptrices ou réceptrices et génératrices.

On parle alors de reconfigurabilité.

Cette sélection peut s'opérer avant l'immersion du système mobile dans le milieu ou de façon beaucoup plus avantageuse, pendant le déplacement du système mobile.

Cette caractéristique permet très avantageusement de reconfigurer les lignes de champ de la boucle des courants excitateurs et par conséquent le comportement du système mobile dans son milieu.

Par exemple, on peut décider d'éloigner la distance entre les électrodes génératrices et réceptrices pour augmenter la portée de la mesure, c'est à dire constituer des lignes de champ plus étendues et détecter des objets plus éloignés. A contrario, au cours d'un mouvement de révolution du système autour d'une sphère, obtenu en consignant certaines valeurs constantes des caractéristiques mesurées, on peut rapprocher la distance entre lesdites électrodes. Ce changement de distance inter-électrodes alors que lesdites valeurs des mesures électriques sont maintenues fixées, a pour conséquence de réduire le rayon de l'orbite de déplacement du système autour de la sphère.

Cette sélection peut être effectuée en fonction d'une caractéristique électrique mesurée par une ou plusieurs électrodes réceptrices.

De façon remarquable, l'invention permet de définir des comportements très différents du système mobile, en fonction de la loi de rétroaction des mesures électriques utilisées pour déterminer les consignes de déplacement.

Par exemple, la loi de rétroaction peut être choisie pour permettre au système mobile de se rapprocher de, s'éloigner de, ou de longer les frontières d'un objet conducteur ou d'un objet isolant.

Le choix et la modification de la loi de rétroaction permet de définir des stratégies de navigation complexes, dans lesquelles on définit des critères de basculement d'un mode de fonctionnement (attraction, répulsion, déplacement le long des frontières d'un objet) à un autre sur détection d'une caractéristique particulière.

Dans un mode de réalisation hors contexte de l'invention, on génère (détermine) la consigne en fonction du courant axial, sans tenir compte du courant latéral, pour suivre les frontières d'un objet conducteur ou isolant.

En outre, pour chaque électrode génératrice, la génération des courants excitateurs peut être faite de manière directe par un générateur de courant, on parle alors de « mode de génération I » ou de manière indirecte par un générateur de tension. On parle alors de « mode de génération U ».

La combinaison des modes de génération U ou I appliqués à toutes les électrodes émettrices, et des modes de mesure U ou I, appliqués à toutes les électrodes réceptrices, permet d'obtenir 4 modes de gestion dits « modes homogènes »: « U-U », « U-I », « I-I », « I-U ». Le terme « homogène » qualifiant un mode dans lequel toutes les électrodes émettrices émettent une caractéristique physique de même nature (tension ou courant) et, toutes les électrodes réceptrices, mesurent une caractéristique physique de même nature (tension ou courant).

A ces quatre modes actifs, on ajoute les deux modes de fonctionnement « passifs », ou les courants excitateurs générés par le système dans le milieu sont nuls, on parle alors de modes (homogènes) « 0-I » ou « 0-U » selon que la mesure est faite en courant ou respectivement en tension sur toutes les électrodes réceptrices.

A ces quatre modes actifs et ces deux modes passifs, on peut ajouter des modes (homogènes) d'émission pure, ou aucune mesure n'est faite et ou toutes les électrodes émettrices génèrent un courant ou une tension. Ces modes « I-0 » et « U-0 » peuvent jouer un rôle dans la communication entre deux systèmes mobiles indépendants par exemple.

Tous ces modes peuvent être combinés en « modes hétérogènes », pour lesquels certaines électrodes réceptrices (respect. émettrices) mesurent (respect. imposent) les tensions, d'autres les courants.

Toutes ces modalités peuvent être sélectionnées avant l'immersion du système mobile dans le milieu ou, grâce à une électronique dédiée, pendant le déplacement du système mobile. Cette aptitude du système accroît les possibilités de la reconfigurabilité.

Dans le cas le plus général, chaque électrode peut être individuellement reconfigurée dans l'un des six modes de fonctionnement suivant (sachant qu'on ne peut émettre et recevoir une même caractéristique électrique sur une même électrode):
1°) Génératrice de tension et réceptrice en courant (« U-I »)
2°) Génératrice de courant et réceptrice en tension (« I-U »)
3°) Génératrice de tension (« U-0 »)
4°) Génératrice de courant (« I-0 »)
5°) Réceptrice en tension (« 0-U »)
6°) Réceptrice en courant (« 0-I »)

Ces six fonctions s'appliquent individuellement à chaque électrode, mais aussi à n'importe quel groupe d'électrodes préalablement connectées par un gestionnaire de connectivité inter-électrodes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente schématiquement un système mobile incorporant un dispositif conforme à un mode particulier de réalisation de l'invention ;
- la figure 2 représente l'architecture matérielle du système mobile de la figure 1 ;
- la figure 3 représente une carte électronique pouvant être utilisée dans l'invention ;
- les figures 4A à 4D donnent des exemples d'implémentation de fonctions génératrices et réceptrices de courant et en tension ;
- la figure 5 représente sous forme d'organigramme les principales étapes d'un programme d'ordinateur pouvant être utilisé pour générer une consigne à partir des mesures des caractéristiques électriques du milieu ;
- la figure 6 représente un environnement de test du système mobile de la figure 1 et ;
- les figures 7, 8A et 8B illustrent des résultats de tests pratiqués dans l'environnement de la figure 6.

### Description détaillée d'un mode de réalisation de l'invention

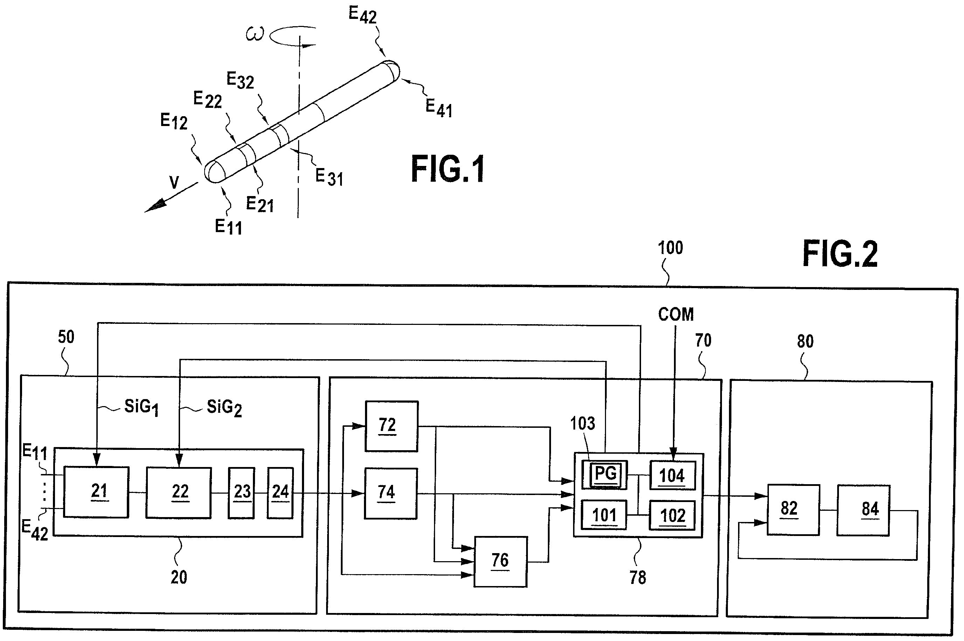

La figure 1 représente de façon schématique un système mobile 100 conforme à un mode particulier de réalisation de l'invention.

Ce système mobile 100 comporte un corps cylindrique de diamètre 20 mm, de longueur totale 220mm et terminé par deux extrémités hémisphériques.

Il comporte 8 électrodes en Inox 316 séparées par des isolants en polychlorure de vinyle et plus précisément, dans ce mode de réalisation :
- un premier groupe G₁ de deux électrodes E₁₁, E₁₂ situées à une première extrémité hémisphérique ;
- un deuxième groupe G₂ de deux électrodes E₂₁, E₂₂ disposées en anneau, environ à un tiers du corps cylindrique ; et
- un troisième groupe G₃ de deux électrodes E₃₁, E₃₂ disposées en anneau, environ à un deuxième tiers du corps cylindrique ; et
- un quatrième groupe G₄ de deux électrodes E₄₁, E₄₂ situées à une deuxième extrémité hémisphérique.

On considérera, pour une électrode E_{iα} donnée que l'indice i désigne son groupe, la valeur α étant égale à 1 (respectivement 2) pour le côté droit (respectivement gauche) par rapport au sens de déplacement du système mobile.

La figure 2 représente l'architecture matérielle du système mobile 100 de la figure 1. D'une façon générale, le système mobile 100 comporte :
- un capteur électrique 50 comportant principalement les 8 électrodes et une carte électronique 20 ;
- un module de navigation 70 ; et
- un module de motorisation 80.

La combinaison du capteur électrique 50 et du module de navigation 70 constitue un dispositif au sens de l'invention.

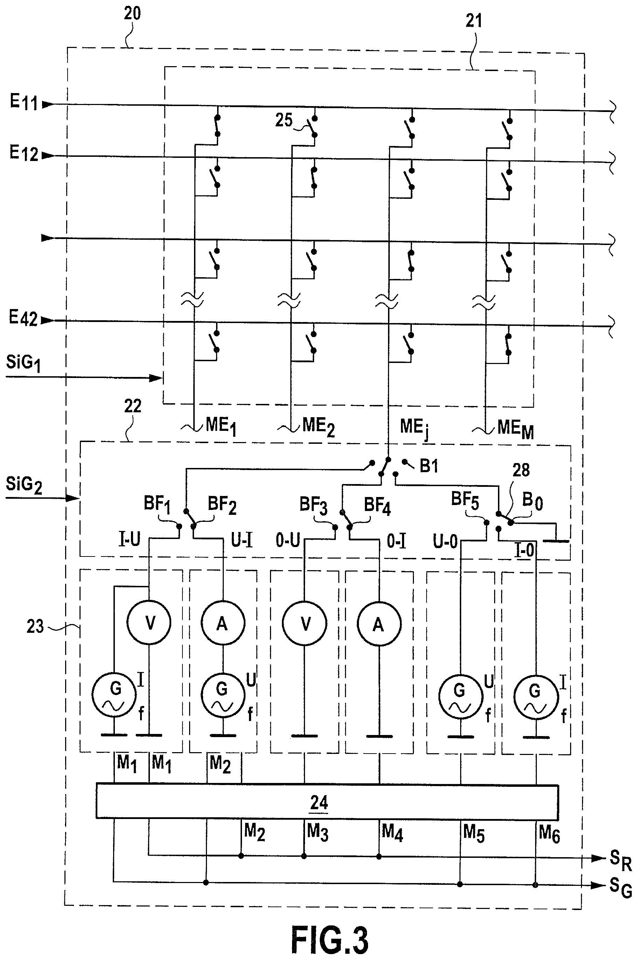

La carte électronique 20 connectée aux 8 électrodes est représentée de façon détaillée à la figure 3.

Dans le mode de réalisation décrit ici, la carte électronique 20 comporte quatre modules principaux, à savoir :
- un module 21 de reconfiguration de la connectivité des électrodes, les groupes d'électrodes connectées formant des groupes d'électrodes nommés « macro-électrodes » ;
- un module 22 de programmation des macro-électrodes selon une fonction choisie parmi un ensemble de fonctions possibles ;
- un module 23 réalisant chacune desdites fonctions possibles ; et
- un module 24 de conversion analogique numérique.

Le module 21 de reconfiguration de la connectivité des électrodes reçoit en entrée K voies d'électrodes, avec K=8 dans cet exemple. Il permet d'interconnecter électriquement les électrodes pour former M voies de macro-électrodes MEⱼ en programmant l'ouverture ou la fermeture d'une première série d'interrupteurs 25, en réponse à un premier signal de commande SIG₁ émis par le module de navigation 70. Dans ce document, on considèrera qu'une électrode interconnectée à aucune autre constitue une macro-électrode, de sorte que M est inférieur ou égal à K.

Le module de programmation 22 permet d'assigner une fonction électrique Fᵢ à chaque macro-électrode MEⱼ, en programmant l'ouverture ou la fermeture d'une deuxième série d'interrupteurs 28 pour connecter la macro-électrode MEⱼ à une borne correspondant à cette fonction, en réponse à un deuxième signal de commande SIG₂ émis par le module de navigation 70.

Plus précisément, dans le mode de réalisation décrit ici, chaque macro-électrode MEⱼ peut être génératrice (bornes BF₅ et BF₆), réceptrice (bornes BF₃ et BF₄), génératrice et réceptrice (bornes BF₁ et BF₂), mise à la masse (borne B₀) ou non connectée (macro-électrode flottante, borne B₁).

De plus, dans ce mode de réalisation, une macro-électrode génératrice peut être génératrice de tension (U) ou de courant (I) et une macro-électrode réceptrice peut être réceptrice de tension (U) ou de courant (I).

Plus précisément, dans le mode de réalisation, le module 23 permet de réaliser les six fonctions suivantes :
- macro-électrode génératrice de courant et réceptrice en tension (fonction dite de type « I-U », borne BF₁) ;
- macro-électrode génératrice de tension et réceptrice en courant (fonction dite de type « U-I », borne BF₂) ;
- macro-électrode non génératrice et réceptrice en tension (fonction dite de type « 0-U », borne BF₃);
- macro-électrode non génératrice et réceptrice en courant (fonction dite de type « 0-I », borne BF₄) ;
- macro-électrode génératrice de tension et non réceptrice (fonction dite de type « U-0 », borne BF₅) ; et
- macro-électrode génératrice de courant et non réceptrice (fonction dite de type « I-0 », borne BF₆).

Le signal analogique de sortie de chacune des fonctions de types I-U, U-I, 0-U, 0-I, U-0 et I-0 du module 23 est converti par le module 24 de conversion analogique numérique en un signal numérique Mᵢ., l'indice i correspondant à l'indice de la borne BFᵢ associée à cette fonction.

Les signaux de sortie du capteur électrique 50 sont :
- d'une part un signal S_{G} représentatif des caractéristiques électriques (tension ou courant) imposées par les macro-électrodes génératrices (signaux M₁, M₂, M₅ et M₆) ; et
- d'autre part un signal S_{R} représentatif des caractéristiques électriques (tension ou courant) mesurées par les macro-électrodes réceptrices (signaux M₁, M₂, M₃ et M₄).

Dans le mode de réalisation décrit ici, les caractéristiques électriques imposées par les macro-électrodes génératrices sont soit une tension sinusoïdale de fréquence fixe f=22,5 kHZ, soit un courant sinusoïdal de même fréquence fixe f.

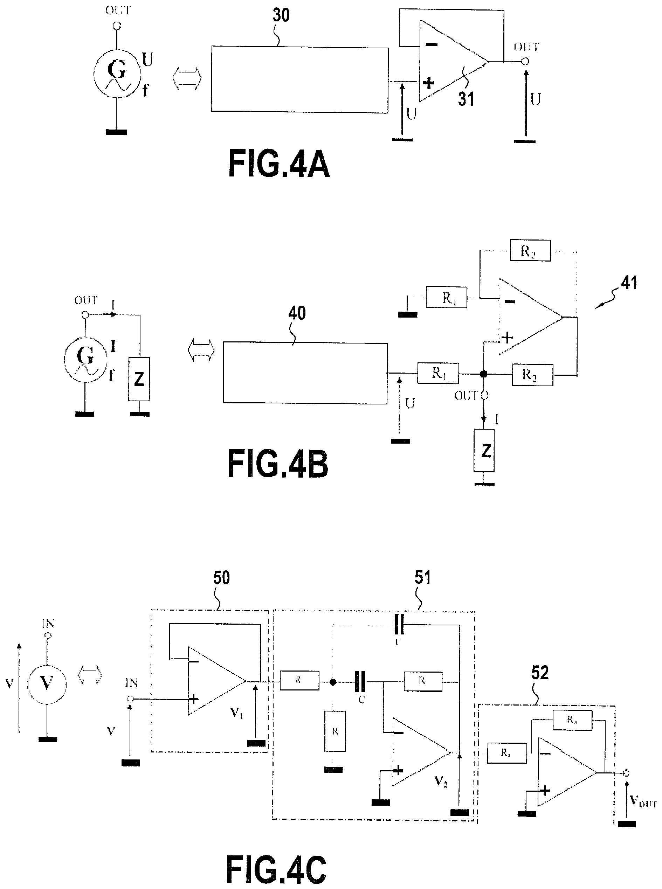

Dans le mode de réalisation décrit ici, et comme représenté à la figure 4A, la fonction génératrice de tension sinusoïdale est constituée d'un générateur basse fréquence 30 couplé à un amplificateur opérationnel 31 monté en suiveur. Le signal sinusoïdal produit a une amplitude U et une fréquence fixe f=22,5 kHz.

Dans le mode de réalisation décrit ici, et comme représenté à la figure 4B, la fonction génératrice de courant sinusoïdal est constituée d'un générateur de courant de Howland 41 piloté par un générateur de tension basse fréquence 40. L'homme du métier reconnaîtra, en référence à cette figure, que le courant débité dans une charge d'impédance Z est donné par I = U/R1.

Dans le mode de réalisation décrit ici, et comme représenté à la figure 4C, la fonction réceptrice en tension est constituée de trois circuits distincts, à savoir :
- Un circuit suiveur 50 (T_{S} = V₁/V = 1) permettant une impédance d'entrée élevée (>3MΩ) afin de ne pas perturber la mesure ;
- Un filtre passe bande du second ordre à structure de Rauch 51. Ce filtre permet d'éliminer efficacement les parasites de manière analogique. A la fréquence de résonnance « f »égale à la fréquence des générateurs de tension 30, 40 ce filtre a pour fonction de transfert : T_{F} = V₂/V₁ = -1/2
- Un amplificateur de tension 52 permettant d'adapter l'amplitude du signal à la gamme du convertisseur analogique /numérique 24 en vue d'un traitement informatique. La fonction de transfert de cet amplificateur inverseur est T_{A} = V_{OUT} / V₂ = -R_{b} / Rₐ

La tension à mesurer V est liée à la tension de sortie du circuit V_{OUT} par l'équation : ${V}_{OUT} = {T}_{S} . {T}_{F} . {T}_{A} . V ,$ soit $V = 2 \left({R}_{a}/{R}_{b}\right) . {V}_{OUT}$ (2)

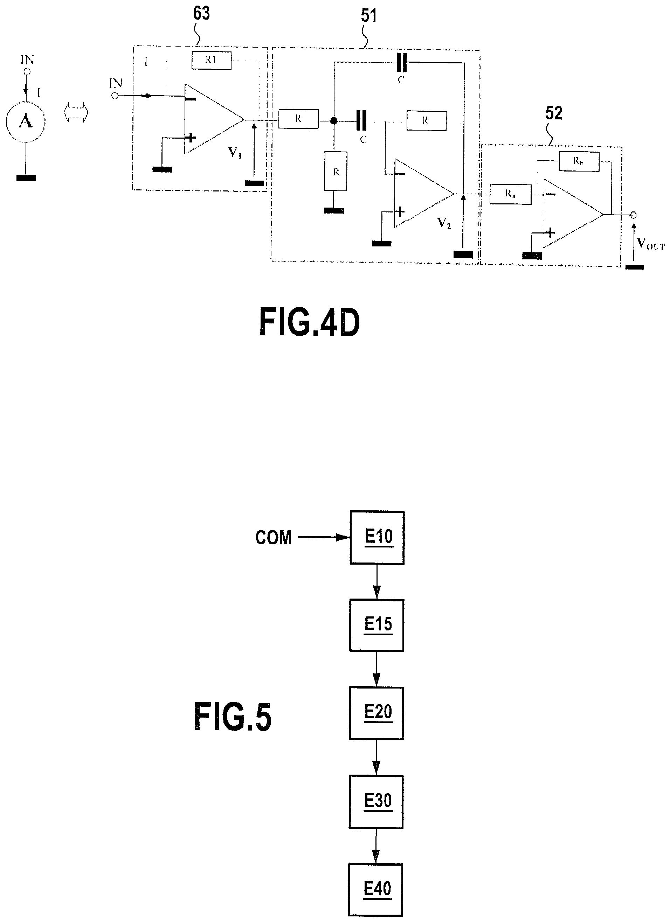

Dans le mode de réalisation décrit ici, et comme représenté à la figure 4D, le circuit récepteur en courant est dérivé du circuit récepteur en tension décrit en référence à la figure 4C il reprend le filtre 51 et l'amplificateur de tension 52 de fonctions de transfert respectives : ${T}_{F} = {V}_{2} / {V}_{1} = - 1 / 2 et {T}_{A} = {V}_{OUT} / {V}_{2} = - {R}_{b} / {R}_{a}$

Ce circuit comporte en outre un circuit trans-impédance 63 ${Z}_{IU} = {V}_{1} / I = - {R}_{1} ,$ dont la fonction est de convertir un signal de courant en un signal de tension aisément traitable.

Le courant à mesurer I est lié à la tension de sortie du circuit V_{OUT} par l'équation : ${V}_{OUT} = {Z}_{UI} . {T}_{F} . {T}_{A} . I ,$ soit $I = - 2 \left({R}_{a}/{R}_{1}{R}_{b}\right) . {V}_{OUT}$ (3)

Les signaux de sortie de la carte 20 sont, en mode U-I :
- d'une part un signal-vecteur S_{G} à deux composantes représentatif des tensions imposées par les deux macro-électrodes génératrices ME₁, ME₂ ; et
- d'autre part un signal-vecteur S_{R} à deux composantes représentatif des courants I mesurés par les macro-électrodes réceptrices ME₁, ME₂.

Dans le mode de réalisation décrit ici, le signal-vecteur S_{R} est fourni en entrée du module de navigation 70 dont la principale fonction est de calculer une consigne de vitesse (V ,ω) du système mobile 100, V et ω correspondant respectivement aux vitesses axiale (parallèle à l'axe du système) et angulaire (perpendiculaire à l'axe du système) (voir figure 1).

Dans le mode de réalisation décrit ici, le module de navigation 70 comporte :
- un bloc d'axialisation 72 qui opère des combinaisons des courants mesurés permettant d'extraire la composante commune gauche-droite (dite axiale) ;
- un bloc de latéralisation 74 qui opère des combinaisons des courants mesurés permettant d'extraire la composante différentielle gauche-droite (latérale) ;
- un bloc de mémorisation 76 apte à mémoriser certaines valeurs des mesures au cours du mouvement ; et
- un bloc 78 de génération des consignes V et ω en fonction du comportement désiré et des mesures de courants regroupées dans le signal-vecteur S_{R}.

Dans le mode de réalisation décrit ici, le bloc 78 de génération de consigne comporte un processeur 101, une mémoire morte 103 comportant un programme d'ordinateur PG exécutable par le processeur 101, une mémoire vive 102 permettant l'exécution de ce programme, et des moyens de communication 104.

Les principales étapes de ce programme d'ordinateur vont maintenant être décrites en référence à la figure 5.

Au cours d'une étape E10, le bloc 78 reçoit, par ses moyens de communication 104, une commande COM représentatif d'un comportement désiré du système mobile 100, choisi dans cet exemple de réalisation parmi trois comportements possibles « attraction », « répulsion », ou « suivi des frontières d'un objet » qui seront décrits ultérieurement. A partir de ce comportement désiré, le processeur 101 détermine l'interconnexion des électrodes en macro-électrodes et le mode de gestion à appliquer (mode « I-U », « U-I », « U-U », « 0-U », « I-I », « 0-I ») et génère les signaux appropriés SIG₁, SIG₂ au capteur électrique 50 pour configuration.

Au cours d'une étape E15, les macro-électrodes génératrices imposent une caractéristique électrique (tension, courant) au milieu aquatique ambiant.

Les composantes du signal-vecteur S_{R} reçues en temps sont mémorisées dans le bloc de mémorisation 76.

Au cours d'une étape E20, le processeur 101 lit les 1000 dernières valeurs du signal-vecteur SR et effectue une moyenne de ces valeurs (étape E30).

Au cours d'une étape E40, le processeur 101 calcule la commande (V, ω) en fonction de la moyenne précitée et d'une loi de rétroaction (en anglais feedback) choisie en fonction du comportement désiré.

Cette commande est transmise au module de motorisation 80.

Dans le mode de réalisation décrit ici, le module de motorisation 80 comporte :
- un bloc de contrôle moteur 82 qui assure aux vitesses mesurées (et/ou estimées) du véhicule notées (Vₘ, ωₘ), le suivi des vitesses (V, ω) consignées par le module de navigation 70 ; et
- un bloc moteur 84 qui assure le mouvement du système mobile dans son environnement.

Nous allons maintenant décrire un scénario particulier dans lequel capteur électrique 50 est configuré (étape E10) pour détecter la présence d'un objet d'une distance la plus grande possible. Pour ce faire les lignes de champ sont créées pour s'étendre le plus loin possible dans l'espace aquatique.

Pour réaliser cette configuration, le module de navigation 70 envoie au module d'interconnexion 21 de la carte électronique 20, un signal de commande SIG₁, pour interconnecter les deux électrodes du premier groupe G₁ pour former une première macro-électrode hémisphérique ME₁ et les deux électrodes du quatrième groupe G₄ pour former une deuxième macro-électrode hémisphérique ME₂.

Dans le mode de réalisation décrit ici, le capteur électrique 50 est configuré (étape E10) dans le mode de gestion dit « U-I » : une tension U est créée entre les deux macro-électrodes ME₁, ME₂ et le courant I les traversant est mesuré.

Pour réaliser cette configuration, le module de navigation 70 envoie au module de programmation 22 de la carte électronique 20, un signal de commande SIG₂, pour connecter les macro-électrodes ME₁, ME₂ à la borne BF₂ associée à la fonction « U-I » du module 23 de la carte 20.

Dans le mode de réalisation décrit ici, les quatre électrodes des groupes G₂ et G₃ ne sont pas interconnectées entre elles ; aucune d'elle n'est connectée ; autrement dit, elles sont toutes reliées à la borne B₁.

On notera que la surface de chacune des macro-électrodes ME₁, ME₂ est deux fois plus importante que celle des électrodes E₁ₓ, E₄ₓ, ce qui permet une réception de courant I augmentée dans le même rapport.

Dans cet exemple, les électrodes E₄₁ et E₄₂ sont des électrodes génératrices sur lesquelles on impose un même potentiel par rapport à toutes les autres définissant la référence commune des tensions.

On note I_{iα} la moyenne, calculée à l'étape E30, des intensités des courants reçus sur 1000 acquisitions par les électrodes E_{iα}.

Dans ce scénario, le bloc de mémorisation 76 du module de navigation 70 mémoriser les courants mesurés qu'ils aient été axialisés et latéralisés ou pas. La première mémorisation consiste à mesurer le courant dit basal I_{iα}⁽⁰⁾, défini comme le courant mesuré dans le milieu (ici l'eau) sans objet (dit milieu infini) dont la somme sur le groupe i est notée Iᵢ⁽⁰⁾.

Le bloc d'axialisation 72 calculant un courant dit axial noté δI_{ax,i} correspondant à la composante commune gauche-droite, et représentant la somme de tous les courants des électrodes du groupe i, auxquels on a retiré la composante basale Iᵢ⁽⁰⁾.

Pour les différents groupes, δI_{ax,i} s'écrit ainsi : ${δI}_{ax , i} = {I}_{i 1} + {I}_{i 2} - \left({{I}_{i 1}}^{\left(0\right)}+{{I}_{i 2}}^{\left(0\right)}\right)$

Le bloc de latéralisation 74 permet de calculer un courant dit latéral, noté δI_{lat,i}, correspondant à la composante différentielle gauche-droite et défini de la manière suivante : ${δI}_{lat , i} = {I}_{i 1} - {I}_{i 2}$

Les courants latéraux et axiaux obéissent aux propriétés suivantes relativement à un objet à portée du capteur électrique 50 :

| | | |
|---|---|---|
| δI_{ax,i} | > 0 | Objet conducteur (résistivité plus faible que le milieu) |
| | < 0 | Objet isolant (résistivité plus forte que le milieu) |
| δI_{lat,i} | > 0 | Objet conducteur à gauche du capteur ou objet isolant à droite du capteur |
| | < 0 | Objet conducteur à droite du capteur ou objet isolant à gauche du capteur |

Dans le mode de réalisation décrit ici, la commande (V, ω) est une loi de rétroaction fonction de la moyenne précitée. Elle permet de mettre en œuvre un comportement désiré, choisi parmi des comportements prédéfinis « d'attraction », « de répulsion », ou « de suivi des frontières d'un objet ».

D'une façon générale, la loi de rétroaction peut prendre la forme générique suivante : $ω = K . \left({δI}_{lat , 1}/{δI}_{ax , 1}\right) ,$ ou K est un gain réglable (*)
V = constante

### Loi réalisant le comportement d'attraction

En imposant au gain K d'être positif non nul, la loi (*) a pour effet de faire rejoindre au système mobile 100 les objets de résistance différente de celle du milieu liquide dans lesquels ils baignent, réalisant ainsi un comportement d'attraction de tout objet électriquement non transparents.

### Loi réalisant le comportement de répulsion

Pour générer le comportement complémentaire (s'éloigner de tous les objets, ou répulsion) il suffit d'inverser le sens de rotation de ω en prenant K négatif non nul dans (*).

En exploitant les propriétés des courants axiaux (tableau 1), la commande peut discriminer la nature électrique des objets.

On utilise par exemple pour cela la loi suivante (**) en remplacement de la loi (*): $\begin{matrix}ω = K . \left({δI}_{lat , 1}/‖ {δI}_{ax , 1} ‖\right) & \left(**\right)\end{matrix}$

Selon cette loi (**), si K est positif, le système mobile 100 est attiré par les conducteurs et repoussé par les isolants, le comportement réciproque étant forcé lorsque K est négatif.

### Loi réalisant le comportement de suivi des frontières d'un objet

Pour faire suivre au système mobile le contour d'un objet, on peut appliquer la loi : $ω = K \left({δI}_{ax , 1}-{{δI}_{ax , 1}}^{mem}\right)$ où δI_{ax,1}^{mem} représente une valeur des courants axiaux, mémorisée à un moment où ils atteignent un point remarquable de leur évolution dans le temps, typiquement quand il atteignent un extremum.

L'homme du métier comprendra que différents comportements peuvent être enchaînés pour mettre en place une stratégie de navigation définie dans la commande COM reçue à l'étape E10.

Par exemple, pour explorer un objet, il est possible d'enchaîner :
- une première phase de comportement d'attraction pour se rapprocher de l'objet ;
- une deuxième phase de comportement de répulsion pour s'éloigne de l'objet ; et
- une troisième phase de comportement de suivi des frontières d'un objet pour rester en orbite de l'objet.

La commutation entre les deux premières phases peut être déclenchée lorsque δI_{ax,2} change de signe. Ce changement de signe se produit lorsque le système mobile véhicule est proche de l'objet et que l'effet perturbatif de l'objet se propage jusqu'au deuxième groupe d'électrodes.

La commutation entre les deux dernières phases peut être déclenchée lorsque |δI_{ax,1}| passe par une valeur minimum. Ce point remarquable se produit lorsque la macro-électrode génératrice et la macro-électrode réceptrice se trouvent équidistants de l'objet considéré.

Les signaux S_{G} et S_{R} en sortie du capteur électrique 50 permettent en outre de mesurer en temps réel le rapport Rext = U/I explicitant la résistance du milieu aquatique vue des deux macro-électrodes ME₁, ME₂.

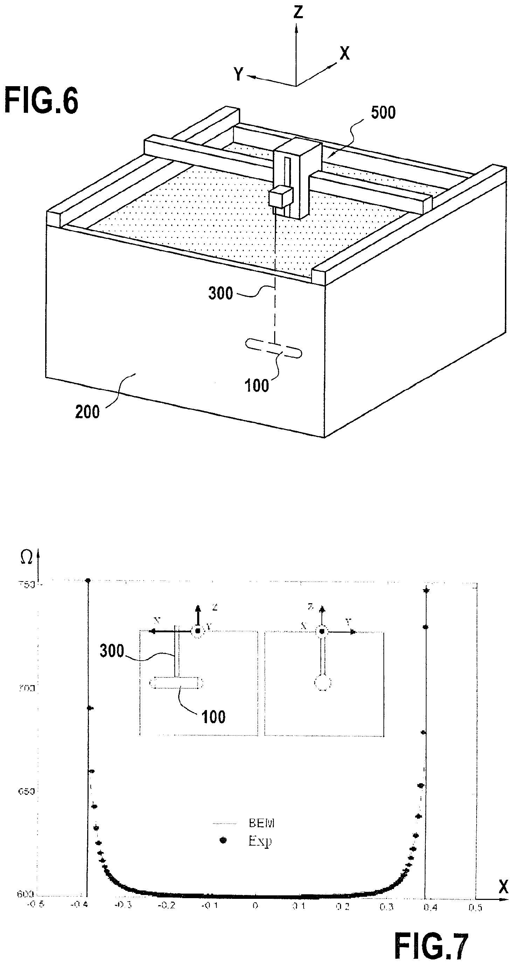

Pour illustrer ces mesures, on peut placer le système mobile 100 de la figure 1 dans un environnement expérimental représenté à la figure 6.

Dans cet exemple particulier, le système mobile 100 est immergé dans un aquarium 200 cubique de 1m de côté, rempli d'eau douce, et dans lequel il peut être déplacé par un robot cartésien 500, auquel il est relié par une tige de maintien 300.

Au cours d'un premier test, on cherche à détecter les parois de l'aquarium. La trajectoire imposée au capteur est une traversée de l'aquarium suivant l'axe X, d'une paroi à l'autre, le centre du dispositif mobile 100 étant placé au milieu de l'aquarium 200 suivant les deux autres axes Y et Z.

Dans cet exemple, les dimensions de la masse d'eau entourant le système mobile 100 est de 971.5x971.5x975 mm³ et la conductivité constante est mesurée à 356µS/cm.

Au cours de ce premier test, on mesure, à partir des signaux S_{G} et S_{R} en sortie du capteur électrique 50, la quantité Rₑₓₜ = U/I - r explicitant la résistance du milieu aquatique vue des deux macro-électrodes ME₁, ME₂ hémisphériques situées aux extrémités du système mobile 100, la résistance r représentant la résistance des câbles liant les électrodes et l'électronique du capteur 50.

La courbe de la figure 7 donne la valeur de la résistance Rext mesurée, comparée à une simulation par Boundary Element Method (BEM).

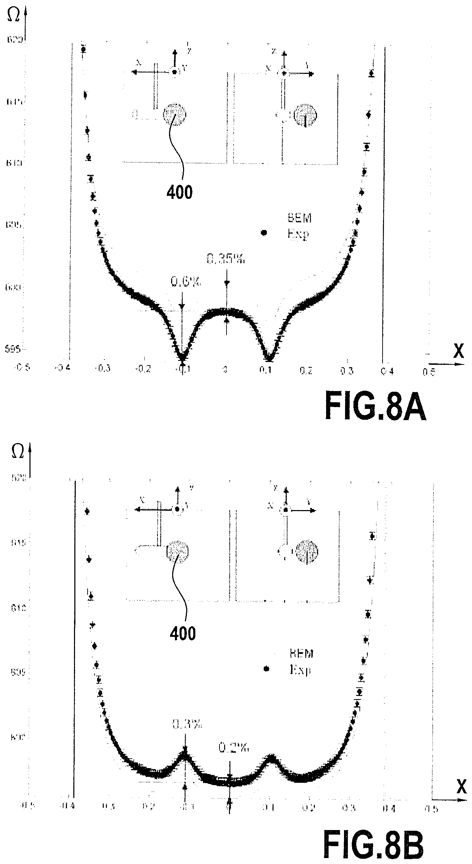

Les figures 8A et 8B permettent d'illustrer un deuxième test consistant à mesurer le rapport Rₑₓₜ = U/I et à le comparer à une simulation en mode BEM lorsqu'un objet sphérique 400 de 40mm de diamètre conducteur (Figure 7A) ou isolant (Figure 7B) est placé à la même hauteur que le système mobile 100 dans l'aquarium 200 mais décalé de 50 mm suivant l'axe Y.

Il apparaît sur ces figures que la signature ohmique de l'objet 400 apparaît clairement sous forme de bosses orientées vers le bas pour l'objet conducteur et vers le haut pour l'objet isolant.

Une variation en forme de bosse apparaît lorsque l'une ou l'autre des macro-électrodes ME1, ME2 passe à proximité de l'objet 400.

## Revendications

1. Procédé de contrôle du déplacement d'un système mobile dans un milieu conducteur d'électricité, ledit système comportant au moins deux électrodes (E₁₁, E₂₁), dites réceptrices, en contact avec ledit milieu et situées de part et d'autre d'un axe de déplacement dudit système, ledit procédé étant **caractérisé en ce qu'**il peut s'appliquer sans connaissance dudit milieu ni des obstacles qui s'y trouvent, ledit procédé étant en outre **caractérisé en ce qu'**il comporte :
- une étape (E30) de mesure d'une caractéristique électrique (S_{R}) dudit milieu par lesdites électrodes réceptrices, ladite caractéristique électrique (S_{R}) comporte un courant axial et un courant latéral obtenus respectivement en faisant la somme et la différence des intensités des courants au niveau desdites électrodes réceptrices ;,
- une étape (E40) de génération d'une consigne (V, ω) de déplacement du système mobile en utilisant une loi de rétroaction calculée directement à partir de ladite caractéristique électrique pour éloigner ou rapprocher ledit système mobile d'un objet conducteur ou d'un objet isolant, la loi de rétroaction étant modifiée en fonction de ladite caractéristique électrique mesurée (S_{R}).

2. Procédé de contrôle du déplacement d'un système mobile selon la revendication 1, dans lequel ledit système comporte au moins deux électrodes (E₁₁, E₄₁) dont une dite électrode réceptrice et une électrode, dite génératrice, apte à imposer un courant électrique audit milieu.

3. Procédé de contrôle selon la revendication 2, **caractérisé en ce que** ladite électrode génératrice et une dite électrode réceptrice sont électriquement connectées entre elles au sein dudit système mobile, et **en ce que** ladite caractéristique électrique mesurée (S_{R}) est l'intensité d'un courant électrique traversant la surface de ladite au moins une électrode réceptrice, en contact avec ledit milieu.

4. Procédé de contrôle selon la revendication 2, **caractérisé en ce que** ladite caractéristique électrique mesurée (S_{R}) est le potentiel électrique sur la surface d'une dite électrode réceptrice, en contact avec ledit milieu, par rapport à un potentiel de référence dudit système, ladite électrode réceptrice étant déconnectée de ladite au moins une électrode génératrice lorsque ledit système comporte une telle électrode génératrice.

5. Procédé de contrôle selon l'une quelconque des revendications 2 à 4, **caractérisé en ce qu'**il comporte une étape (E10) de gestion de la connectivité électrique entre lesdites électrodes, au sein du système mobile, pour sélectionner lesdites électrodes génératrices et lesdites électrodes réceptrices.

6. Procédé de contrôle selon la revendication 5, **caractérisé en ce que** ladite sélection est effectuée en fonction de ladite au moins une caractéristique électrique mesurée par au moins une dite électrode réceptrice.

7. Procédé de contrôle selon l'une quelconque des revendications 2 à 6, **caractérisé en ce que** ladite au moins une électrode génératrice impose un signal électrique (S_{G}) sinusoïdal de fréquence 22.5 kHz audit milieu.

8. Dispositif (50, 70) pouvant être fixé ou incorporé à un système mobile apte à se déplacer dans un milieu conducteur d'électricité, ce dispositif pouvant être utilisé sans connaissance dudit milieu ni des obstacles qui s'y trouvent, et comportant :
- au moins deux électrodes (E₁₁), dites réceptrices, en contact avec ledit milieu et situées de part et d'autre d'un axe de déplacement dudit système ;
- des moyens de mesure d'une caractéristique électrique (S_{R}) dudit milieu par ces électrodes réceptrices, ladite caractéristique électrique (S_{R}) comporte un courant axial et un courant latéral obtenus respectivement en faisant la somme et la différence des intensités des courants au niveau desdites électrodes réceptrices ; et
- des moyens de génération d'une consigne (V, ω) de déplacement du système mobile en utilisant une loi de rétroaction calculée directement à partir de ladite caractéristique électrique pour éloigner ou rapprocher ledit système mobile d'un objet conducteur ou d'un objet isolant, la loi de rétroaction étant modifiée en fonction de ladite caractéristique électrique mesurée (S_{R}).

9. Système mobile comportant un dispositif selon la revendication 8.

## Patentansprüche

1. Verfahren zur Steuerung der Verschiebung eines mobilen Systems in einer elektrisch leitfähigen Umgebung, wobei das System mindestens zwei Elektroden (E₁₁, E₂₁), die als Rezeptoren bezeichnet werden, in Kontakt mit der Umgebung und sich auf beiden Seiten einer Verschiebungsachse des Systems befindend umfasst, wobei das Verfahren **dadurch gekennzeichnet ist, dass** es ohne Kenntnis der Umgebung und der Hindernisse, die sich darin befinden, angewandt werden kann, wobei das Verfahren ferner **dadurch gekennzeichnet ist, dass** es umfasst:
- einen Schritt (E30) der Messung einer elektrischen Eigenschaft (S_{R}) der Umgebung durch die Rezeptorelektroden, wobei die elektrische Eigenschaft (S_{R}) eine Axialströmung und eine Lateralströmung umfasst, die jeweils mit der Summe und der Differenz der Intensitäten der Ströme im Bereich der Rezeptorelektroden erhalten werden,
- einen Schritt (E40) der Erzeugung eines Sollwertes (V, 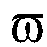 ) der Verschiebung des mobilen Systems durch Anwendung eines Gesetzes der Rückkopplung, das direkt aus der elektrischen Eigenschaft berechnet wird, um das mobile System von einem leitfähigen Objekt oder von einem isolierenden Objekt zu entfernen oder diesem anzunähern, wobei das Gesetz der Rückkopplung in Abhängigkeit der gemessenen elektrischen Eigenschaft (S_{R}) modifiziert wird.

2. Verfahren zur Steuerung der Verschiebung eines mobilen Systems nach Anspruch 1, wobei das System mindestens zwei Elektroden (E₁₁, E₄₁) umfasst, wobei eine davon als Rezeptorelektrode und eine als Generatorelektrode bezeichnet wird, die dazu geeignet ist, der Umgebung einen elektrischen Strom zu verleihen.

3. Verfahren zur Steuerung nach Anspruch 2, **dadurch gekennzeichnet, dass** die Generatorelektrode und eine Rezeptorelektrode innerhalb des mobilen Systems elektrisch miteinander verbunden sind und dass die gemessene elektrische Eigenschaft (S_{R}) die Intensität eines elektrischen Stroms ist, der die Oberfläche der mindestens einer Rezeptorelektrode in Kontakt mit der Umgebung durchläuft.

4. Verfahren zur Steuerung nach Anspruch 2, **dadurch gekennzeichnet, dass** die gemessene elektrische Eigenschaft (S_{R}) das elektrische Potential auf der Oberfläche einer Rezeptorelektrode in Kontakt mit der Umgebung in Bezug auf ein Referenzpotential des Systems ist, wobei die Rezeptorelektrode von der mindestens einen Generatorelektrode getrennt ist, wenn das System eine solche Generatorelektrode umfasst.

5. Verfahren zur Steuerung nach einem der Ansprüche 2 bis 4, **dadurch gekennzeichnet, dass** es einen Schritt (E10) der Verwaltung der elektrischen Konnektivität zwischen den Elektroden innerhalb des mobilen Systems umfasst, um die Generatorelektroden und die Rezeptorelektroden auszuwählen.

6. Verfahren zur Steuerung nach Anspruch 5, **dadurch gekennzeichnet, dass** die Auswahl in Abhängigkeit der mindestens einen gemessenen elektrischen Eigenschaft durch mindestens eine Rezeptorelektrode vorgenommen wird.

7. Verfahren zur Steuerung nach einem der Ansprüche 2 bis 6, **dadurch gekennzeichnet, dass** die mindestens eine Generatorelektrode der Umgebung ein sinusförmiges elektrisches Signal (S_{G}) mit der Frequenz 22,5 kHz verleiht.

8. Vorrichtung (50, 70), die an einem mobilen System befestigt oder darin integriert werden kann, das dazu geeignet ist, sich in einer elektrisch leitfähigen Umgebung zu verschieben, wobei diese Vorrichtung ohne Kenntnis der Umgebung und der Hindernisse, die sich darin befinden, verwendet werden kann, und umfasst:
- mindestens zwei Elektroden (E₁₁), die als Rezeptoren bezeichnet werden, in Kontakt mit der Umgebung und sich auf beiden Seiten einer Verschiebungsachse des Systems befindend,
- Mittel zur Messung einer elektrischen Eigenschaft (S_{R}) der Umgebung durch diese Rezeptorelektroden, wobei die elektrische Eigenschaft (S_{R}) eine Axialströmung und eine Lateralströmung umfasst, die jeweils mit der Summe und der Differenz der Intensitäten der Ströme im Bereich der Rezeptorelektroden erhalten werden, und
- Mittel zur Erzeugung eines Sollwertes (V, 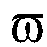 ) der Verschiebung des mobilen Systems durch Anwendung eines Gesetzes der Rückkopplung, das direkt aus der elektrischen Eigenschaft berechnet wird, um das mobile System von einem leitfähigen Objekt oder von einem isolierenden Objekt zu entfernen oder diesem anzunähern, wobei das Gesetz der Rückkopplung in Abhängigkeit der gemessenen elektrischen Eigenschaft (S_{R}) modifiziert wird.

9. Mobiles System, das eine Vorrichtung nach Anspruch 8 umfasst.

## Claims

1. A method to control the movement of a mobile system in an electrically conductive medium, said system including at least two electrodes (E₁₁, E₂₁), called receiving electrodes, in contact with said medium and located on either side of a movement axis of said system, said method being **characterized in that** it can be applied without knowledge of the medium or of the obstacles located therein, said method further being **characterized in that** it includes:
- a step (E30) for measuring an electrical characteristic (S_{R}) of said medium via said receiving electrodes, said electrical characteristic (S_{R}) includes an axial current and a lateral current respectively obtained by obtaining the sum and the difference of the intensities of the currents at said receiving electrodes;
- a step (E40) for generating a setpoint (V, ω) for movement of the mobile system by using a feedback law calculated directly from said electrical characteristic in order to move said mobile system further from or closer to a conductive object or an insulating object, the feedback law being modified based on said measured electrical characteristic (S_{R}).

2. The method to control a mobile system according to claim 1, wherein said system includes at least two electrodes (E₁₁, E₄₁) including a so-called receiving electrode and a so-called generating electrode, able to impose an electric current on said medium.

3. The control method according to claim 2, **characterized in that** said generating electrode and said receiving electrode are electrically connected to one another within said mobile system, and **in that** said measured electrical characteristic (S_{R}) is the intensity of an electric current passing through the surface of said at least one receiving electrode, in contact with said medium.

4. The control method according to claim 2, **characterized in that** said measured electrical characteristic (S_{R}) is the electrical potential on the surface of one said receiving electrode, in contact with said medium, relative to a reference potential of said system, said receiving electrode being disconnected from said at least one generating electrode when said system includes one such generating electrode.

5. The control method according to any one of claims 2 to 4, **characterized in that** it includes a step (E10) for managing the electrical connectivity between said electrodes, within the mobile system, in order to select said generating electrodes and said receiving electrodes.

6. The control method according to claim 5, **characterized in that** said selection is made based on said at least one electrical characteristic measured by at least one said receiving electrode.

7. The control method according to any one of claims 2 to 6, **characterized in that** said at least one generating electrode imposes a sinusoidal electrical signal (S_{G}) with frequency 22.5 kHz on said medium.

8. A device (50, 70) able to be attached to or incorporated into a mobile system able to move in an electrically conductive medium, this device being able to be used without knowledge of the medium or of the obstacles located therein, and including:
- at least two electrodes (E₁₁), called receiving electrodes, in contact with said medium and located on either side of a movement axis of said system;
- means for measuring an electrical characteristic (S_{R}) of said medium via said receiving electrodes, said electrical characteristic (S_{R}) includes an axial current and a lateral current respectively obtained by obtaining the sum and the difference of the intensities of the currents at said receiving electrodes; and
- means for generating a setpoint (V, ω) for movement of the mobile system by using a feedback law calculated directly from said electrical characteristic in order to move said mobile system further from or closer to a conductive object or an insulating object, the feedback law being modified based on said measured electrical characteristic (S_{R}).

9. A mobile system including a device according to claim 8.
